# EUROPÄISCHE PATENTSCHRIFT

(11) **EP 3 680 214 B1**
(45) Veröffentlichungstag und Bekanntmachung des Hinweises auf die Patenterteilung: **25.08.2021**
(21) Anmeldenummer: 19151608.7
(22) Anmeldetag: 14.01.2019
(51) Int. Cl.: C01B 21/26, C01B 21/38, B01J 23/42, B01J 35/06

(54) **KATALYSATORSYSTEM SOWIE VERFAHREN ZUR KATALYTISCHEN VERBRENNUNG VON AMMONIAK ZU STICKSTOFFOXIDEN IN EINER MITTELDRUCKANLAGE**
CATALYST SYSTEM AND METHOD FOR THE CATALYTIC COMBUSTION OF AMMONIA TO FORM NITROGEN OXIDES IN A MEDIUM PRESSURE SYSTEM
SYSTÈME DE CATALYSEUR AINSI QUE PROCÉDÉ DE COMBUSTION CATALYTIQUE D'AMMONIAC EN OXYDE D'AZOTE DANS UNE INSTALLATION À MOYENNE PRESSION

(43) Veröffentlichungstag der Anmeldung: 15.07.2020
(73) Patentinhaber: Heraeus Deutschland GmbH & Co KG, 63450 Hanau (DE)
(72) Erfinder: Boll, Willi, 63450 Hanau (DE); Maier, Dirk, 63450 Hanau (DE)
(74) Vertreter: Staudt, Armin Walter

(56) Entgegenhaltungen:
- EP-A2- 2 689 841
- WO-A1-2018/065271
- DE-T2- 60 201 502

## Beschreibung

### Technisches Gebiet

Die vorliegende Erfindung betrifft ein Katalysatorsystem für die katalytische Verbrennung von Ammoniak zu Stickstoffoxiden in einer Mitteldruckanlage, mit einer Vielzahl aus platinbasiertem Edelmetalldraht gestrickter, gewebter oder gewirkter Katalysatornetzlagen, die in einer Frischgas-Strömungsrichtung gesehen hintereinander angeordnet eine Katalysatorpackung bilden.

Außerdem betrifft die Erfindung ein Verfahren zur katalytischen Verbrennung von Ammoniak zu Stickstoffoxiden in einer Mitteldruckanlage, indem ein Ammoniak und Sauerstoff enthaltendes Frischgas durch ein Katalysatorsystem geleitet und Ammoniak dabei verbrannt wird.

Durch heterogen edelmetallkatalysierte Oxidation von Ammoniak mit Sauerstoff zu Stickoxid nach dem Ostwald-Verfahren wird im großtechnischen Maßstab Salpetersäure für die chemische Industrie und für die Düngemittelproduktion hergestellt.

### Stand der Technik

Die dafür eingesetzten Katalysatorsysteme werden in die Reaktionszone eines Strömungsreaktors in einer Ebene senkrecht zur Strömungsrichtung des Frischgases eingebaut, wobei häufig mehrere Katalysatornetze hintereinander angeordnet und zu einer sogenannten Katalysator-Packung zusammengefasst sind. Die Katalysatornetze bestehen aus ein- oder mehrlagigen Gestricken, Gewirken oder Geweben aus feinen Edelmetalldrähten. Die Edelmetalldrähte bestehen überwiegend aus Platin (Pt), Palladium (Pd), Rhodium (Rh) oder aus Legierungen dieser Metalle.

Die Ammoniakoxidation kann bei niedrigem Druck (1-3 bar; PtRh10), mittlerem Druck (3,5-7 bar; PtRh5) oder bei hohem Druck (8-14 bar, PtRh3) erfolgen. In der Klammer ist die für den jeweiligen Druckbereich typische binäre PtRh-Legierung genannt, wobei die Ziffer den Rhodiumanteil in Gewichtsprozenten angibt).

Bei der Verbrennung von Ammoniak mittels Sauerstoff fällt das ozonschädigende und zu den Treibhausgasen zählende Distickstoffoxid (N₂O) als unerwünschtes Nebenprodukt an. Es ist daher wichtig, die Bildung von N₂O bei der Verbrennungsreaktion möglichst zu vermeiden, ohne dass die Ausbeute an gewünschten Stickstoffoxiden beeinträchtigt wird.

In Salpetersäureanlagen kommen je nach Bauart zwischen 2 und 30 KatalysatorNetze bis zu 6 m Durchmesser zum Einsatz. Der Edelmetalleinsatz stellt eine hohe, gebundene Investition dar und wird so gering wie möglich gehalten. Andererseits hängt die "katalytische Effizienz", die eine wichtige Kenngröße und ein Maß für dauerhaft hohe Umsätze der Edukte und gute Ausbeute ist, vom Edelmetall-Anteil ab.

Während des Ammoniakoxidationsprozesses verlieren die Katalysatornetze infolge von Oxidation und Sublimation kontinuierlich Edelmetall, so dass sie von Zeit zu Zeit (Standzeit, Gebrauchsdauer) mit gewissem Aufwand ausgetauscht werden müssen. Als geeigneter Kompromiss hinsichtlich Gebrauchsdauer, katalytischer Effizienz und Edelmetalleinsatz hat sich die PtRh5-Legierung erwiesen, die sich als industrieller Standard für Edelmetallkatalysatoren für den Einsatz in Mitteldruckanlagen durchgesetzt hat.

Um den Edelmetalleinsatz unter Beibehaltung der katalytischen Effizienz zu verringern, schlägt die DE 101 05 624 A1 einen Strömungsreaktor zur katalytischen Oxidation von Ammoniak in einem Mitteldruckverfahren vor, bei dem dreidimensional gestrickte Katalysatornetze eingesetzt werden, bei denen die einzelnen Maschenlagen durch Polfäden miteinander verbunden sind. Maschen- und Polfäden bestehen aus demselben Werkstoff; beispielsweise aus PtRh5 oder aus PtRh8. DE 602 01 502 T2 offenbart dreidimensionale, in zwei oder mehreren Schichten gestrickte Katalysatorennetze, wobei die Katalysatorschichten spezifische Flächengewichte aufweisen.

Im Ausführungsbeispiel wird ein Testreaktor mit einer Katalysatorpackung aus PtRh5-Draht eingesetzt, die sich aus einem Ensemble aus zwei vorderen einlagig gestrickten Katalysatornetzen mit einem Flächengewicht von 600 g/m², einem mittleren Ensemble aus drei zweilagig gestrickten Katalysatornetzen mit einem vergleichsweise höheren Flächengewicht von 900 g/m² pro Katalysatornetzlage und abschließend aus einem zweilagig gestrickten und von Schussfäden durchsetzten Katalysatornetz mit einem Flächengewicht von je 800 g/m² pro Katalysatornetzlage zusammensetzt. Das Gesamteinbaugewicht an Edelmetall beträgt 16,5 kg und liegt damit 4 kg niedriger als bei einem Referenzreaktor mit vergleichbarer katalytischer Effizienz.

### Technische Aufgabenstellung

Die in der DE 101 05 624 A1 beschriebene Erfindung erfordert weiterhin einen hohen Edelmetalleinsatz.

Der Erfindung liegt die Aufgabe zugrunde, ein Katalysatorsystem für den Einsatz in einer Mitteldruckanlage für die Ammoniakoxidation bereitzustellen, mit dem trotz vermindertem Edelmetalleinsatz eine zum industriellen Standard vergleichbare Ausbeute des Hauptprodukts NO erzielt werden kann.

Außerdem liegt der Erfindung die Aufgabe zugrunde, ein Verfahren für die Ammoniakoxidation in einer Mitteldruckanlage anzugeben, mittels dem eine vergleichsweise hohe Produktausbeute bei geringerem Edelmetalleinsatz erzielbar ist.

### Zusammenfassung der Erfindung

Hinsichtlich des Katalysatorsystems wird diese Aufgabe ausgehend von einem Katalysatorsystem der eingangs genannten Gattung erfindungsgemäß dadurch gelöst, dass die Katalysatorpackung aus einem vorderen Ensemble mit drei Katalysatornetzen mit einem ersten mittleren Flächengewicht und einem dem vorderen Ensemble nachgeordneten, stromabwärtigen Ensemble von Katalysatornetzlagen mit einem zweiten mittleren Flächengewicht gebildet wird, wobei das mittlere Flächengewicht des vorderen Ensembles bezogen auf das zweite mittlere Flächengewicht ein Mindergewicht im Bereich von 1,5 % bis 29% aufweist, und dass das erste mittlere Flächengewicht im Bereich von 410 bis 530 g/m² und das zweite mittlere Flächengewicht im Bereich von 540 bis 790 g/m² liegen.

Das Katalysatorsystem umfasst eine Katalysatorpackung, die sich aus Katalysatornetzlagen des vorderen und des stromabwärtigen Katalysatornetzlagen-Ensembles zusammensetzt, sowie etwaige Getternetze, die hier nicht näher betrachtet werden. Die Katalysatornetzlagen der Katalysatorpackung werden von ein- oder mehrlagigen Katalysatornetzen aus platinbasierten Edelmetalldrähten gebildet. Sofern nichts anderes gesagt ist, wird im Folgenden als Äquivalent zu "Katalysatornetzlage" auch der Begriff "Katalysatornetz" im Sinne eines einlagigen Katalysatornetzes verwendet.

Im vorderen Ensemble sind die in Frischgas-Strömungsrichtung gesehen ersten drei Katalysatornetzlagen zusammengefasst. Es grenzt an das stromabwärtige Ensemble an, das ebenfalls mehrere Katalysatornetzlagen umfasst. Die Katalysatornetzlagen haben vor ihrem bestimmungsgemäßen Einsatz ein anfängliches nominales Flächengewicht, das beispielsweise in einer Spezifikation oder einer anderen Vorgabe festgelegt ist. Die Katalysatornetzlagen eines Ensembles können jeweils das gleiche nominale Flächengewicht haben, oder sie können sich darin voneinander unterscheiden. Betrachtet wird hier das mittlere Flächengewicht des Ensembles, das definiert ist als Quotient aus der Summe der nominalen (anfänglichen) Flächengewichte und der Anzahl der Katalysatornetze des jeweiligen Ensembles. Die ein- oder mehrlagigen Katalysatornetze bestehen aus platinbasiertem Edelmetalldraht mit einem Durchmesser d. Das Flächengewicht einer Katalysatornetzlage hängt unter anderem vom Durchmesser des jeweiligen Edelmetalldrahts ab. Je größer der Drahtdurchmesser ist, umso höher liegt bei gegebener Maschenweite das Flächengewicht. Übliche Drahtdurchmesser liegen im Bereich von 40 bis 120 µm; ein Standard-Drahtdurchmesser bei Katalysatornetzen für Mitteldruckanlagen liegt bei 76 µm. Das mittlere Flächengewicht des vorderen Ensembles liegt im Bereich von 410 bis 530 g/m², und das mittlere Flächengewicht der Katalysatornetze des stromabwärtigen Ensembles liegt im Bereich von 540 bis 790 g/m².

Durch das geringere mittlere Flächengewicht des vorderen Ensembles ergibt sich im vorderen Längenabschnitt der Katalysatorpackung eine geringere Raumerfüllung im Vergleich zum stromabwärtigen Ensemble, die mit einem signifikant geringeren Einsatz an Edelmetall in den Katalysatornetzlagen des vorderen Ensembles einhergeht. An und für sich wäre zu erwarten, dass mit der Einsparung an Edelmetall auch eine merkliche Verringerung der katalytischen Effizienz des Katalysatorsystems einhergeht. Es wurde aber überraschend gefunden, dass die katalytische Effizienz weitgehend - im Rahmen einer Messgenauigkeit von etwa 0,3% (absolut) - beibehalten werden kann, wenn gleichzeitig der Unterschied zwischen erstem mittlerem und zweitem mittlerem Flächengewicht gering gehalten wird, und zwar - bezogen auf das zweite mittlere Flächengewicht - im Bereich von 1,5% bis 29 % und vorzugsweise maximal 25 % liegt.

Die gewünschte weitgehende Beibehaltung der katalytischen Effizienz setzt einen vergleichsweise engen Bereich der mittleren Flächengewichte der Katalysatornetzlagen von erstem und zweitem Ensemble voraus, wie oben angegeben. Besonders bewährt hat sich eine Ausführungsform des Katalysatorsystems, bei der das erste mittlere Flächengewicht im Bereich von 415 bis 510 g/m² liegt, und das zweite mittlere Flächengewicht im Bereich von 575 bis 710 g/m² liegt. Die Unterschiede im Flächengewicht können auf der Drahtstärke des Edelmetalldrahts beruhen. Es hat sich aber als besonders günstig erwiesen, wenn die Katalysatornetzlagen des vorderen und stromabwärtigen Ensembles aus einem Edelmetalldraht mit gleicher oder etwa gleicher Drahtstärke gefertigt sind, und wenn der Unterschied im Flächengewicht im Wesentlichen aufgrund unterschiedlicher Wirk-, Strick- oder Webmuster der Katalysatornetze erzeugt wird. Demnach bestehen die Katalysatornetzlagen des vorderen Ensembles aus einem Gewirk mit einem ersten Wirkmuster und einer ersten Maschenweite, oder aus einem Gewebe mit einem ersten Webmuster und einer ersten Maschenweite oder aus einem Gestrick mit einem ersten Strickmuster und einer ersten Maschenweite, und die Katalysatornetzlagen des stromabwärtigen Ensembles bestehen aus einem Gewirk mit einem zweiten Wirkmuster und einer zweiten Maschenweite oder aus einem Gewebe mit einem zweiten Webmuster und einer zweiten Maschenweite oder aus einem Gestrick mit einem zweiten Strickmuster und einer zweiten Maschenweite, wobei die erste Maschenweite größer ist als die zweite Maschenweite.

Der Unterschied im Flächengewicht beruht daher nicht oder nicht ausschließlich auf Unterschieden in den Drahtstärken, sondern im Wesentlichen auf unterschiedlichen Wirk-, Strick- oder Webmustern der Katalysatornetze, und zwar auf den Maschenweiten. Die Maschenweite der Katalysatornetzlagen des vorderen Ensembles bewirkt somit im Wesentlichen ein um maximal 29%, vorzugsweise maximal 25% geringeres mittleres Gewicht pro Flächeneinheit als bei den Katalysatornetzlagen des stromabwärtigen Ensembles. Die Katalysatornetzlagen des stromabwärtigen Ensembles sind beispielsweise in Form von Standard-Katalysatornetzen für den Mitteldruckbetrieb mit einem Drahtdurchmesser von 76 µm und einem Flächengewicht von 600 g/m² ausgebildet.

Die vergleichsweise offenere Ausführung der Maschen in den Katalysatornetzlagen des vorderen Ensembles kann auch zu einer verbesserten Ausnutzung der sich in der Katalysatorpackung einstellenden Strömung und so zu einer höheren Selektivität des Katalysatorsystems beitragen. Denn üblicherweise erfolgt die Reaktion im Netzpaket in den vorderen (obersten) Netzlagen, wodurch diese besonders stark thermisch und mechanisch belastet werden. Durch eine offenere Ausführung der Maschen in diesem Bereich kann die Belastung der oberen Netzlagen auf weiter unten liegende Netzlagen verteilt werden, so dass sich trotz des geringeren Edelmetalleinsatzes die Effizienz des Katalysatorsystems nicht wesentlich verringert.

Je geringer das individuelle Flächengewicht einer einzelnen Katalysatornetzlage ist, umso größer ist die Einsparung an Edelmetall. Andererseits kann die katalytische Effizienz des Katalysatorsystems bei geringen Flächengewichten nachlassen. Daher ist bei einer bevorzugten Ausführungsform des Katalysatorsystems vorgesehen, dass das individuelle Flächengewicht der Katalysatornetzlagen des vorderen Ensembles in der Abfolge in Frischgas-Strömungsrichtung gesehen konstant ist oder zunimmt.

Das Katalysatorsystem kann Katalysatornetze aus Edelmetalldraht auf Basis anderer Edelmetalle als Platin und Rhodium, wie Palladium oder Iridium enthalten, oder Edelmetalldraht aus einer Legierung, die außer Platin und Rhodium ein anderes Edelmetall oder mehrere andere Edelmetalle enthält. Im einfachsten und bevorzugten Fall bestehen die Katalysatornetzlagen des vorderen und des stromabwärtigen Ensembles nur aus Platin und Rhodium.

Bei einer weiteren vorteilhaften Ausführungsform des Katalysatorsystems umfassen die Katalysatornetzlagen eine vordere Gruppe von Netzlagen mit einer Netzlage oder mit mehreren Netzlagen aus einem ersten, rhodiumreichen Edelmetalldraht sowie eine der vorderen Gruppe nachgeordnete, stromabwärtige Gruppe von Netzlagen aus einem zweiten, rhodiumarmen Edelmetalldraht, wobei die Netzlage oder eine der Netzlagen aus dem rhodiumreichen Edelmetalldraht eine dem Frischgas zugewandte, vorderste Netzlage bildet, und wobei der Rhodiumgehalt im rhodiumreichen Edelmetalldraht mindestens 7 Gew.-% und maximal 9 Gew.-% beträgt und um mindestens 1 Prozentpunkt höher ist als der Rhodiumanteil im rhodiumarmen Edelmetalldraht.

Bei dieser Ausführungsform ist die Vielzahl von Katalysatornetzlagen platinbasierter ein- oder mehrlagiger Katalysatornetze in mindestens zwei Gruppen unterteilt. Die vordere Gruppe beinhaltet mindestens eine Katalysatornetzlage. Die stromabwärtige Gruppe stellt in der Regel den größten Volumen- und Gewichtsanteil des Katalysatorsystems und umfasst eine Vielzahl von Katalysatornetzlagen Die gewichtsreduzierten Katalysatornetzlagen des vorderen Ensembles mit dem ersten, niedrigeren mittleren Flächengewicht können gleichzeitig die Netzlagen der vorderen Gruppe aus der rhodiumreichen Legierung bilden; in der Regel - und bevorzugt - unterscheiden sich diese Baueinheiten der Katalysatorpackung jedoch. Das heißt: die "vordere Gruppe von Katalysatornetzlagen" und das "vordere Ensemble von Katalysatornetzlagen" müssen nicht deckungsgleich sein, ebensowenig muss die "stromabwärtige Gruppe von Katalysatornetzlagen" mit dem "stromabwärtigen Ensemble von Katalysatornetzlagen" übereinstimmen.

Die stromabwärtige Gruppe stellt in der Regel den größten Volumen- und Gewichtsanteil des Katalysatorsystems und umfasst eine Vielzahl von Katalysatornetzlagen. Die vordere Gruppe und die stromabwärtige Gruppe können durch Katalysatornetze mit anderer Zusammensetzung voneinander getrennt sein. Im bevorzugten Fall liegen sie aber unmittelbar benachbart zueinander. Die vordere Gruppe beinhaltet im einfachsten Fall die in Frischgas-Strömungsrichtung gesehen vorderste Katalysatornetzlage. Die Katalysatornetze der beiden Gruppen bestehen aus gewirkten, gestrickten oder gewebten Edelmetalldrähten, die sich in ihrer chemischen Zusammensetzung unterscheiden. Beim Edelmetalldraht der Katalysatornetzlage(n) der vorderen Gruppe beträgt der Rhodiumgehalt mindestens 7 Gew.-% und maximal 9 Gew.-%, und er ist um mindestens 1 Prozentpunkt höher als der Rhodium-Gewichtsanteil im Edelmetalldraht der Katalysatornetzlagen der stromabwärtigen Gruppe; deren Rhodium-Gewichtsanteil beträgt demnach nicht mehr als 6 %.

Der Rhodiumanteil im rhodiumreichen Edelmetalldraht der vorderen Gruppe liegt mit mindestens 7 Gew.-% höher als der auf Effizienz, Gebrauchsdauer und N₂O-Vermeidung optimierte Standard bei industriellen Salpetersäureanlagen für den Mitteldruckbetrieb, der bei 5 Gew.-% liegt. Es ist daher überraschend, dass durch Einsatz des rhodiumreichen Edelmetalldrahts eine höhere katalytische Effizienz erzielbar ist, ohne dass dies negative Auswirkungen auf Gebrauchsdauer und N₂O-Bildung hat. Dieses Ergebnis wird aber nicht erzielt, wenn alle in Strömungsrichtung des Frischgases folgenden Katalysatornetzlagen ebenfalls aus einem rhodiumreichen Edelmetalldraht bestehen, sondern nur dann, wenn in Strömungsrichtung des Frischgases der Rhodiumanteil abnimmt und die Katalysatornetzlagen der stromabwärtigen Gruppe aus rhodiumarmem Edelmetalldraht bestehen, wobei hier der Rhodium-Gewichtsanteil nicht mehr als 6 Gew.-% beträgt, und vorzugsweise im Bereich des industriellen Standardwertes von 5 Gew.-% liegt.

Bei Verwendung von Legierungen mit einem niedrigeren Rhodium-Anteil als 7 Gew.-% beim rhodiumreichen Edelmetalldraht wird eine geringe Erhöhung der katalytischen Effizienz erreicht. Bei einem höheren Rhodium-Anteil als 9 Gew.-% können sich bei ungünstigen Druckverhältnissen und Temperaturen Rhodiumoxide bilden, die eine über die Gebrauchsdauer des Katalysatorsystems schleichende Beeinträchtigung der katalytischen Effizienz hervorrufen.

In der Regel entfällt der größte Anteil am Gesamtgewicht der Katalysatornetze des Katalysatorsystems von beispielsweise mindestens 70 % auf KatalysatorNetzlagen aus dem rhodiumarmen Edelmetalldraht, und es genügt, wenn nur ein kleiner Gewichtsanteil von beispielsweise weniger als 30%, vorzugsweise weniger als 25%, und besonders bevorzugt weniger als 20% auf Netzlagen der vorderen Gruppe aus dem rhodiumreichen Edelmetalldraht entfällt. Es hat sich beispielsweise bewährt, wenn die vordere Gruppe maximal drei Netzlagen umfasst.

Hinsichtlich einer hohen katalytischen Effizienz bei zugleich geringen oder keinen negativen Auswirkungen auf die Gebrauchsdauer und N₂O-Bildung hat es sich bewährt, wenn der Rhodiumanteil im rhodiumarmen Edelmetalldraht im Bereich von 4 bis 6 Gew.-% liegt, insbesondere wenn der Rhodiumanteil im rhodiumreichen Edelmetalldraht im Bereich von 7,8 bis 8,2 Gew.-% und der Rhodiumanteil im rhodiumarmen Edelmetalldraht im Bereich von 4,8 bis 5,2 Gew.-% liegen.

Die vordere Gruppe der Netzlagen weist eine dem Frischgas zugewandte, vorderste Netzlage auf, die aus dem rhodiumreichen Edelmetalldraht besteht. Diese vorderste Netzlage kann dabei beispielsweise Teil eines mehrlagigen Katalysatornetzes sein, oder die vorderste Netzlage ist dabei als Einzellage eines einlagigen Katalysatornetzes ausgebildet. Es hat sich überraschend gezeigt, dass es zur Erhöhung der katalytischen Effizienz genügt, wenn die vordere Gruppe der Netzlagen alleine von der vordersten Netzlage gebildet wird. Dies stellt eine besonders einfache und daher bevorzugte Ausführungsform des Katalysatorsystems dar.

Im Hinblick darauf hat es sich auch als vorteilhaft erwiesen, wenn die vorderste Netzlage - beispielsweise als Einzellage oder als Mehrfachlage eines mehrlagigen Katalysatornetzes - auf den Netzlagen der stromabwärtigen Gruppe aufliegt. In dem Fall befindet sich der die Katalysatorpackung beinhaltende Strömungsreaktor in senkrechter Position und die Strömungsrichtung ist senkrecht von oben nach unten gerichtet.

Reibung und Gewichtskraft genügen für die Fixierung der vordersten Netzlage auf der Katalysatorpackung. Dies vereinfacht die Herstellung des Katalysatorsystems und die Nachrüstung bestehender Katalysatorsysteme zu einem Katalysatorsystem gemäß der vorliegenden Erfindung.

Hinsichtlich des Verfahrens wird die oben genannte technische Aufgabe ausgehend von einem Verfahren der eingangs genannten Gattung dadurch gelöst, dass das Frischgas mit einem Ammoniakgehalt zwischen 9,5 und 12 Vol.-% unter einem Druck im Bereich zwischen 3,5 und 7 bar, bei einer Katalysatornetztemperatur im Bereich von 870 bis 920°C und mit einem Durchsatz im Bereich von 6 bis 16 tN/m²d durch ein Katalysatorsystem gemäß der vorliegenden Erfindung geleitet wird.

Die Abkürzung "tN/m²d" steht dabei für "Tonnen Stickstoff (aus Ammoniak) pro Tag und effektiver Querschnittsfläche der Katalysatorpackung in Quadratmeter. Das Verfahren ist für den Betrieb im Mitteldruckbereich zwischen 3,5 und 7 bar ausgelegt. Bei einem Ammoniak-Anteil von weniger als 9,5 Vol.-% im Frischgas und bei einem Durchsatz von weniger als 6 tN/m²d kann der Verbrennungsprozess ungewollt zum Erliegen kommen. Ein NH₃-Anteil von mehr als 12 Vol.-% im Frischgas liegt nah an der Sicherheitsschwelle zum explosionsfähigen Gemisch. Bei einer Katalysatornetztemperatur von weniger als 870°C kann es zunehmend zur Bildung von Rhodiumoxid kommen und bei einer Katalysatornetztemperatur oberhalb von 920°C setzt die Platinoxidabdampfung verstärkt ein. Die Katalysatornetztemperatur wird durch die Vorheiz-Temperatur des Frischgases beeinflusst, die vorzugsweise im Bereich von 150 und 220°C liegt.

### Definitionen

### Edelmetalldraht

Unter einem edelmetallhaltigen Draht wird ein Draht verstanden, der aus Edelmetall besteht oder einen nennenswerten Anteil (> 50 Gew.-%) an Edelmetall enthält. Eine platinbasierte Legierung enthält mehr als 50 Gew.-% Platin. Als weitere Legierungsbestandteile sind insbesondere Palladium, Rhodium und Ruthenium zu nennen. Typische Edelmetalldraht-Durchmesser liegen im Bereich von 40-120 µm.

### Mitteldruckanlagen

In Mitteldruckanlagen erfolgt die Ammoniakoxidation bei einem Druck im Bereich von 3,5 bis 7 bar. Für diesen Druckbereich haben sich Edelmetall-Katalysatoren aus Edelmetalldraht aus einer binären PtRh5-Legierung mit einem Durchmesser von 76 µm und einem Flächengewicht von etwa 600 g/m² als Standard etabliert.

### Katalvsatornetz

Ein durch Weben, Wirken oder Stricken eines Edelmetalldrahts oder mehrerer Edelmetalldrähte erzeugtes, einlagiges oder mehrlagiges textiles Flächengebilde. Die textile Flächenbildung wird durch maschenförmiges Verschlingen eines oder mehrerer Fadensysteme beziehungsweise Drahtsysteme erreicht.

### Katalysatorsystem

Das Katalysatorsystem umfasst eine Katalysatorpackung sowie in der Regel ein Getternetz oder mehrere Getternetze, die ebenfalls durch Stricken, Weben oder Wirken von Edelmetalldraht erzeugt sind.

### Katalysatorpackung

Eine Anordnung mehrerer Katalysatornetze in Strömungsrichtung des Frischgases hintereinander.

### Ausführungsbeispiel

Nachfolgend wird die Erfindung anhand von Ausführungsbeispielen und einer Zeichnung erläutert. Dabei zeigt:
- **Figur 1**: einen Strömungsreaktor zur heterogen-katalytischen Verbrennung von Ammoniak in schematischer Darstellung,
- **Figur 2**: ein Säulendiagramm mit Ergebnissen zur katalytischen Effizienz von Testreaktoren im Vergleich zu einem Referenzreaktor, und
- **Figur 3**: ein Säulendiagramm mit Ergebnissen zur N₂O-Bildung der Testreaktoren im Vergleich zu dem Referenzreaktor.

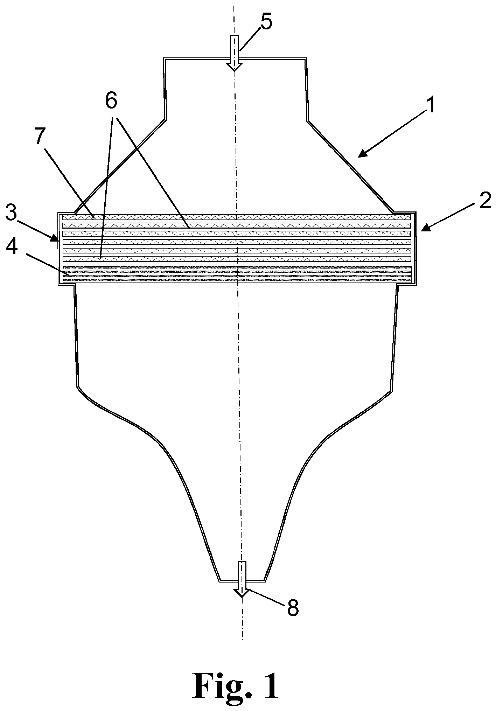

**Figur 1** zeigt schematisch einen senkrecht positionierten Strömungsreaktor 1 zur heterogen-katalytischen Verbrennung von Ammoniak. Das Katalysatorsystem 2 bildet die eigentliche Reaktionszone des Strömungsreaktors 1. Es umfasst eine Katalysatorpackung 3 und nachgeschaltete Getternetze 4. Die Katalysatorpackung 3 umfasst mehrere, in Strömungsrichtung 5 des Frischgases hintereinander angeordnete einlagige Katalysatornetze 6, auf die ein weiteres Katalysatornetz 7 (oder mehrere Katalysatornetzlagen) aufgelegt sein kann, das gegebenenfalls Bestandteil der Katalysatorpackung ist. Ausführungsformen sind in den Tabellen 1 bis 5 näher spezifiziert. Der effektive Katalysatornetz-Durchmesser beträgt 100 mm.

Das Frischgas ist ein Ammoniak-Luftgemisch mit einem nominalen Ammoniakgehalt von 10,7 Vol.%. Es wird auf eine Vorheiztemperatur von 175°C erwärmt und von oben in den Reaktor 1 unter einem erhöhten Druck von 5 bar eingeleitet. Beim Eintritt in die Katalysatorpackung 3 erfolgen eine Zündung des Gasgemischs und eine anschließende exotherme Verbrennungsreaktion, die die gesamte Katalysatorpackung 3 erfasst. Dabei findet folgende Hauptreaktion statt:

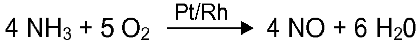

Dabei wird Ammoniak (NH₃) zu Stickstoffmonoxid (NO) und Wasser (H₂O) umgesetzt. Das gebildete Stickstoffmonoxid (NO) reagiert im abströmenden Reaktionsgasgemisch (symbolisiert durch den die Strömungsrichtung des abströmenden Reaktionsgasgemischs anzeigenden Richtungspfeil 8) mit überschüssigem Sauerstoff zu Stickstoffdioxid (NO₂), das mit Wasser in einer nachgeschalteten Absorptionsanlage zu Salpetersäure (HNO₃) umgesetzt wird.

Die Katalysatornetze 6, 7 sind jeweils textile Flächengebilde, die durch maschinelles Wirken eines Edelmetalldrahtes mit einem Durchmesser von 76 µm aus binären Platin-Rhodium-Legierungen erzeugt sind. Im Strömungsreaktor 1 wurden die in den Tabellen 1 bis 5 spezifizierten Katalysatorsysteme getestet.

Bei den meisten Testreaktoren umfasst die Katalysatorpackung fünf einlagige Katalysatornetze 6; bei einem Testreaktor umfasst die Katalysatorpackung ein zusätzliches, aufgelegtes Katalysatornetz 7. Die Katalysatornetze sind durch Wirken eines Edelmetalldrahts aus einer binären PtRh-Legierung erzeugt worden. Die Reihenfolge der Benennung in den Tabellen 1 bis 5 gibt die Anordnung in Strömungsrichtung des Frischgases wieder. Zusätzlich sind bei allen Reaktoren Getternetze 4 vorgesehen, die aus sechs aktiven Catchment-Netzlagen ("Getternetze") aus Pd82.5Pt15Rh2.5 bestehen. Die Testreaktoren unterscheiden sich voneinander in der Zusammensetzung der vordersten (obersten) Katalysatornetzlage 7 und/oder im Flächengewicht der Katalysatornetzlagen.

Der Referenzreaktor gemäß Tabelle 1 repräsentiert dabei einen Reaktor nach derzeitigem industriellen Standard für Mitteldruckanlagen. Die einlagigen Katalysatornetze sind aus einem Edelmetalldraht mit einem Draht-Durchmesser von 76 µm erzeugt. Das Flächengewicht der eingesetzten PtRh5-Katalysatornetze beträgt wie in der Spalte "FI.-Gew. pro Lage" angegeben, jeweils 600 g/m². Die Summe der Flächengewichte aller Lagen L1 bis L5 der Katalysatorpackung beträgt somit 3000 g/m².

**Tabelle 1: Referenzreaktor**

| **Netzlage** | **Edel-metall** | **FI.-Gew. pro Lage [g/m²]** |
|---|---|---|
| L1 | PtRh5 | 600 |
| L2 | PtRh5 | 600 |
| L3 | PtRh5 | 600 |
| L4 | PtRh5 | 600 |
| L5 | PtRh5 | 600 |
| | | **Σ:3000** |

In den folgenden Tabellen 2 bis 5 sind Daten zu Testreaktoren R1 bis R4 angegeben. In der Spalte "Ensemble- Zuordnung" steht die Ziffer "1" für die Zuordnung der jeweiligen Katalysatornetzlage zum vorderen Ensemble (im Folgenden auch als "Ensemble 1" bezeichnet), und die Ziffer "2" zeigt die Zuordnung der jeweiligen Katalysatornetzlage(n) zum stromabwärtigen Ensemble an (im Folgenden auch als "Ensemble 2" bezeichnet). Bei allen Testreaktoren R1 bis R4 sind die Katalysatornetzlagen L1 bis L3 dem "vorderen Ensemble" im Sinne der Erfindung zuzuordnen; dieses ist zusätzlich durch Grauschattierung markiert.

In der Spalte "Mittl. Fl.-Gew. pro Ensemble" (in g/m²) ist der Quotient aus der Summe der einzelnen, individuellen Flächengewichte der Katalysatornetze und der Anzahl der Katalysatornetze des jeweiligen Ensembles angegeben, der hier auch kurz als "mittleres Flächengewicht" bezeichnet wird. Die Flächengewichte sind nominale, anfängliche Flächengewichte, wie sie mit einem Edelmetalldraht mit einem Drahtdurchmesser von 76 µm standardmäßig erzielbar sind.

Die letzte Spalte der Tabellen gibt den Unterschied zwischen dem mittleren Flächengewicht von Ensemble 1 und einem mittleren Flächengewicht von Ensemble 2 in % an (Basis der %-Angabe ist dabei das zweite mittlere Flächengewicht). Diese %-Angabe repräsentiert somit die Edelmetallersparnis des jeweiligen Testreaktors im Vergleich zu einem Reaktor, bei dem die Katalysatorpackung vollständig aus Katalysatornetzlagen mit dem zweiten Flächengewicht besteht.

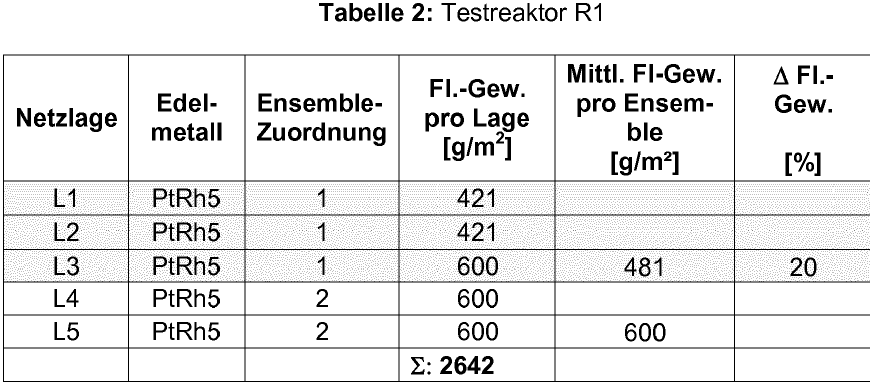

Beim Testreaktor R1 beträgt das mittlere Flächengewicht des vorderen Ensembles 481 g/m², das sind etwa 20% weniger als das mittlere Flächengewicht von 600 g/m² der Lagen L4 und L5, die ein "stromabwärtiges Ensemble" der Katalysatorpackung darstellen.

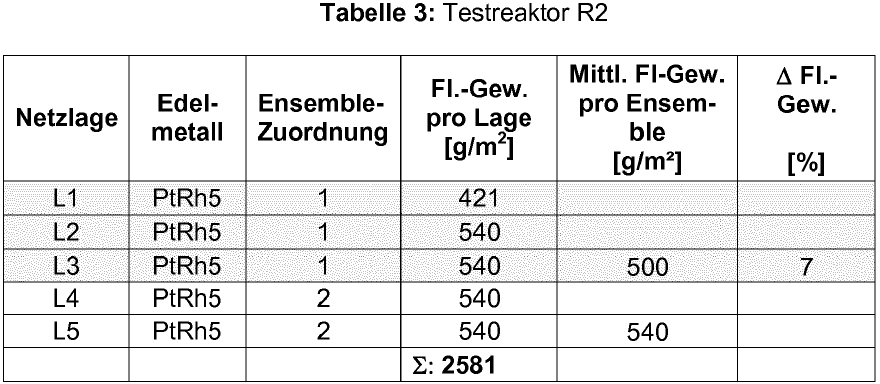

Beim Testreaktor R2 wird das Ensemble 1 ebenfalls von den obersten Katalysatornetzlagen L1 bis L3 gebildet. Deren nominales, anfängliches, mittleres Flächengewicht beträgt 500 g/m²; das sind etwa 7% weniger als beim mittleren Flächengewicht von Ensemble 2, das bei 540 g/m² liegt.

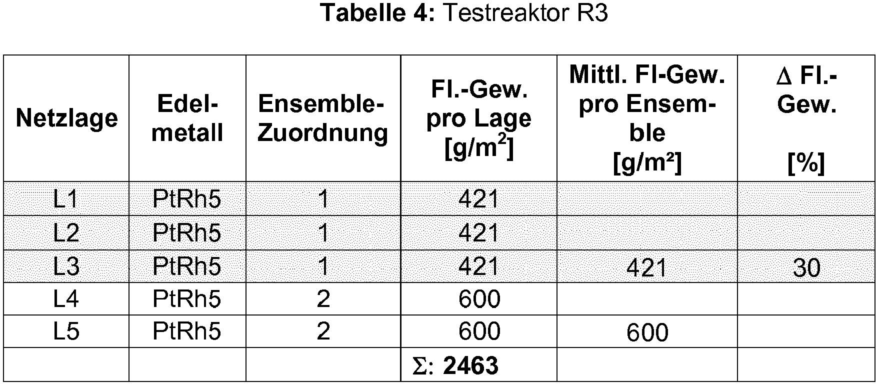

Auch beim Testreaktor R3 wird das vordere Ensemble (1) von den Katalysatornetzlagen L1 bis L3 gebildet. Ihr Flächengewicht beträgt jeweils 421 g/m², das sind etwa 30% weniger als das Standard-Flächengewicht von 600 g/m² (bei einem Edelmetalldraht-Durchmesser von 76 µm).

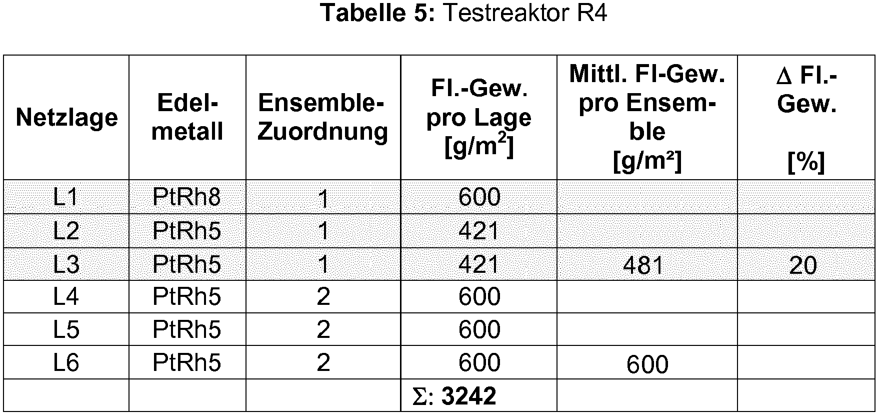

Beim Testreaktor R4 besteht die oberste Katalysatornetzlage L1 aus einer PtRh8-Legierung und sie hat ein Flächengewicht von 600 g/m². Die beiden daran unmittelbar anschließenden Katalysatornetze bestehen aus einer PtRh5-Legierung und haben ein Wirkmuster, das zu einem vergleichsweise geringeren Flächengewicht von 421 g/m² führt. Diese drei Lagen bilden das Ensemble 1. Die drei letzten Katalysatornetzlagen L4 bis L6 der Katalysatorpackung bilden das Ensemble 2 und bestehen ebenfalls aus PtRh5-Legierung mit einem Flächengewicht von 600 g/m².

Das vordere Ensemble wird auch hiervon den Katalysatornetzlagen L1 bis L3 gebildet. Ihr mittleres Flächengewicht (481 g/m²) ist um etwa 20% geringer als das mittlere Flächengewicht des Ensembles 2 - also der Lagen L4 bis L6.

Die vorderste Lage L1 ist auf die übrige Katalysatorpackung (Bezugsziffer 2 in Fig. 1) aufgelegt. Sie bildet das in Strömungsrichtung 5 vorderste Katalysatornetz (Bezugsziffer 7 in Fig. 1) aus einem rhodiumreichen Edelmetalldraht und damit eine "vordere Gruppe von Katalysatornetzlagen" im Sinne einer bevorzugten Ausführungsform der Erfindung. Dabei bilden die übrigen Katalysatornetzlagen L2 bis L6 aus dem vergleichsweise rhodiumarmen Edelmetalldraht eine "stromabwärtige Gruppe von Katalysatornetzlagen" im Sinne dieser Ausführungsform der Erfindung.

Die Testreaktoren wurden bei folgenden, jeweils gleichen Testbedingungen betrieben.

| | |
|---|---|
| Druck: | 5 bar (absolut) |
| Durchsatz: | 12 Tonnen Stickstoff (aus Ammoniak) pro Tag und effektiver Querschnittsfläche der Katalysatorpackung in Quadratmeter (abgekürzt mit 12 tN/m²d) |
| NH₃-Anteil: | 10.7 Vol.-% im Frischgas |
| Vorheiztemp.: | 175°C (Temperatur des NH₃/Luft Gemisches), woraus sich in den Testreaktoren eine Netztemperatur von 890°C ergibt. |

Im Abstand von etwa 24 h wurde die Entwicklung der katalytischen Effizienz als Ausbeute an NO und der Anteil des als Nebenprodukt anfallenden N₂O gemessen. Für jeden der Testreaktoren R1 bis R4 ergeben sich jeweils fünf Messergebnisse.

Die Messung der katalytischen Effizienz (das heißt, der Produktausbeute an NO) hat folgenden Ablauf:
1. Vorab wird sichergestellt, dass das Katalysatorsystem für den vollständigen Umsatz des eingesetzten Ammoniaks geeignet und NH₃ im Produktgas nicht mehr in nennenswerter Menge vorhanden ist. Diese Überprüfung erfolgt mittels massenspektrometrischer Untersuchung des Produktgases.
2. Gleichzeitige Entnahme einer Probe von NH₃/Luft stromaufwärts zur Katalysatorpackung und einer Probe aus dem Produktgas stromabwärts in jeweils eigenständige evakuierte Kolben. Die Masse des Gases wird durch Wiegen bestimmt.
3. Das NH₃ Luft/Gemisch wird in destilliertem Wasser absorbiert und mittels 0.1N Schwefelsäure und Methylrot nach Farbumschlag titriert.
4. Die nitrosen Produktgase werden in 3%iger Natriumperoxid Lösung absorbiert und mittels 0.1N Natriumhydroxid Lösung und Methylrot nach Farbumschlag titriert.
5. Die katalytische Effizienz Eta ergibt sich aus: Eta = 100 x Cn / Ca, wobei Ca die mittlere NH₃ Konzentration aus 7 Einzelmessungen im Frischgas in Gewichtsprozent und Cn die mittlere NOx Konzentration aus 7 Einzelmessungen ist, ausgedrückt als Gewichtsprozent des NH₃ welches zu NOx oxidiert worden ist.
6. Separat wird der Volumenanteil an N₂O im Produktgas mittels GasChromatographie bestimmt.

Die Messergebnisse sind in **Tabelle 6** zusammengefasst. In den mit "NO-NO_{Ref}" bezeichneten Spalten von Tabelle 6 ist die Ausbeute-Differenz an Stickstoffmonoxid in absoluten Prozentpunkten im Vergleich zum Referenzreaktor angegeben (beispielsweise ergibt Messung Nr. 1 bei Reaktor R1 eine Ausbeute an NO von 95,2%, und damit gegenüber dem Messwert 95,4% im Referenzreaktor einen Unterschied NO-NO_{Ref} von -0,2 Prozentpunkten). In den mit "N₂O - N₂O_{Ref}" bezeichneten Spalten ist die Differenz an Distickstoffmonoxid jeweils im Vergleich zum Referenzreaktor in Vol.-ppm angegeben.

**Tabelle 6**

| **Nr.** | **Referenzreaktor** | | **Reaktor 1** | | **Reaktor 2** | | **Reaktor 3** | | **Reaktor 4** | |
|---|---|---|---|---|---|---|---|---|---|---|
| | **Ausbeute NO** | **N₂O** | **NO - NO_{Ref}** | **N₂O - N₂O_{Ref}** | **NO - NO_{Ref}** | **N₂O-N₂O_{Ref}** | **NO - NO_{Ref}** | **N₂O-N₂O_{Ref}** | **NO** - **NO_{Ref}** | **N₂O - N₂O_{Ref}** |
| | **Vol.-%** | **Vol.-ppm** | **[%_abs]** | **[ppm]** | **[%_abs]** | **[ppm]** | **[%_abs]** | **[ppm]** | **[%_abs]** | **[ppm]** |
| 1 | 95,4 | 868 | -0,2 | 7 | | | | | | |
| 2 | 95,3 | 835 | 0,0 | 24 | | | | | | |
| 3 | 95,2 | 745 | -0,1 | 34 | | | | | | |
| 4 | 95,0 | 895 | 0,0 | 42 | | | | | | |
| 5 | 95,1 | 886 | 0,2 | 50 | | | | | | |
| 1 | 95,4 | 845 | | | -0,1 | -38 | | | | |
| 2 | 95,3 | 800 | | | 0 | -29 | | | | |
| 3 | 95,2 | 730 | | | 0 | -10 | | | | |
| 4 | 95,2 | 802 | | | -0,2 | 44 | | | | |
| 5 | 95,1 | 807 | | | 0,1 | 47 | | | | |
| 1 | 95,4 | 845 | | | | | -0,7 | 51 | | |
| 2 | 95,3 | 729 | | | | | -0,6 | 68 | | |
| 3 | 95,2 | 730 | | | | | -0,5 | 77 | | |
| 4 | 95,1 | 807 | | | | | -0,6 | 151 | | |
| 5 | 95,2 | 843 | | | | | -0,7 | 143 | | |
| 1 | 95,2 | 870 | | | | | | | 0,3 | -18 |
| 2 | 95,3 | 834 | | | | | | | 0,2 | -11 |
| 3 | 95,3 | 867 | | | | | | | 0,3 | 7 |
| 4 | 95,4 | 899 | | | | | | | 0,1 | 18 |
| 5 | 95,2 | 945 | | | | | | | 0,3 | -12 |

### Messergebnisse

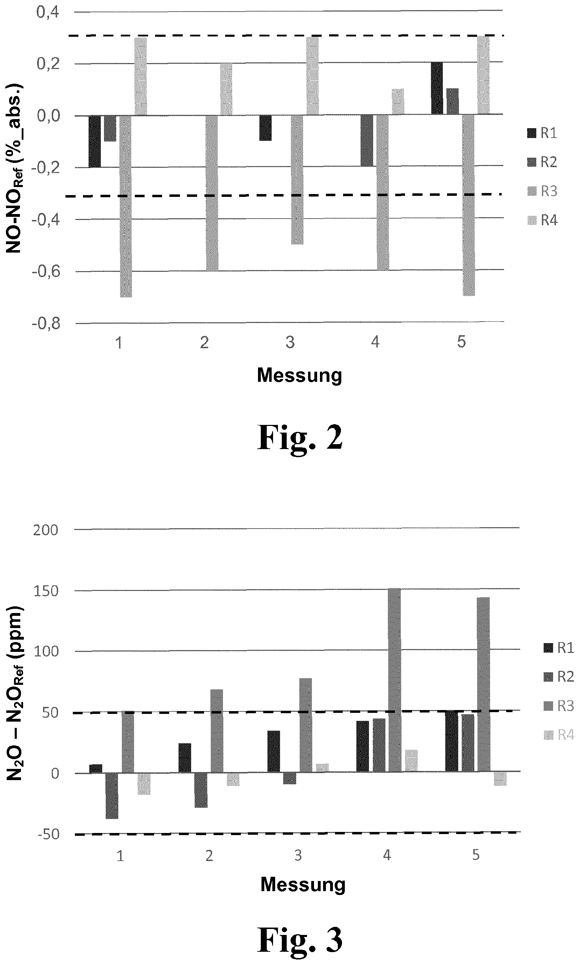

Die Messergebnisse von Tabelle 6 sind in den Diagrammen der Figuren 2 und 3 graphisch dargestellt und werden anhand dieser Figuren nachfolgend erläutert.

Das Diagramm von **Figur 2** zeigt für die Reaktoren R1 bis R4 jeweils ein Maß für die katalytische Effizienz für den Stickstoffdurchsatz von 12 tN/m²d. Auf der y-Achse ist die Differenz der Ausbeute an Stickstoffmonoxid im Vergleich zum Referenzreaktor "NO-NO_{Ref}" in absoluten Prozentpunkten (%_abs.) aufgetragen. Auf der x-Achse bezeichnen die Ziffern 1 bis 5 die fortlaufende Nummer der jeweiligen Messung.

Demnach ergibt sich bei den beiden Reaktoren R1 und R2 eine Effizienz der Umsetzung zu NO, die im Rahmen des Messfehlers mit der Ausbeute des industriellen Standards gemäß Referenzreaktor vergleichbar ist. Der Messfehler liegt bei etwa +/- 0,3 Prozentpunkten, wie anhand der gestrichelten Linie markiert.

Beim Reaktor R3 ist die Ausbeute des Hauptprodukts NO jedoch nicht mit dem industriellen Standard vergleichbar. Dies wird auf den großen Unterschied von 30% zwischen den Katalysatornetzlagen des vorderen Ensembles mit den Katalysatornetzlagen L1 bis L3 und des stromabwärtigen Ensembles mit den Katalysatornetzlagen L4 und L5 zurückgeführt. Der Reaktor R3 stellt somit ein Vergleichsbeispiel für die Erfindung dar.

Beim Reaktor R4 ergibt sich trotz des geringeren Edelmetalleinsatzes eine katalytische Effizienz, die im Rahmen des Messfehlers vergleichbar mit der Ausbeute beim Referenzreaktor ist. Der Messfehler liegt bei etwa +/- 0,3 Prozentpunkten, wie anhand der gestrichelten Linie markiert. Da die erste Lage jedoch ein höheres Flächengewicht als die unteren Lagen des ersten Ensembles hat, ist kein signifikanter Effizienzgewinn wie bei Reaktor 1 sichtbar.

Das Diagramm von **Figur 3** zeigt die Messergebnisse zur N₂O-Bildung bei den Testreaktoren R1 bis R4. Auf der y-Achse ist die Differenz der Distickstoffoxid-Menge im Produktgas (N₂O-N₂O_{Ref}) im Vergleich zum Referenzreaktor in Vol.-ppm aufgetragen. Auf der x-Achse bezeichnen wiederum die Ziffern 1 bis 5 die fortlaufende Nummer der jeweiligen Messung.

Demnach ergibt sich bei den Testreaktoren R1, R2 und R4 eine N₂O-Menge im Bereich des Referenzreaktors. Der Standard-Messfehler beträgt etwa +/- 50 Vol.-ppm und ist wiederum durch gestrichelte Linien angedeutet.

Bei Reaktor R3 ergibt sich jedoch eine Erhöhung der N₂O-Bildung oberhalb der Messungenauigkeit. Daher ist Reaktor R3 auch im Hinblick auf eine Verminderung der N₂O-Bildung ungeeignet.

## Patentansprüche

1. Katalysatorsystem für die katalytische Verbrennung von Ammoniak zu Stickstoffoxiden in einer Mitteldruckanlage, mit einer Vielzahl aus platinbasiertem Edelmetalldraht gestrickter, gewebter oder gewirkter, Katalysatornetzlagen (6; 7), die in einer Frischgas-Strömungsrichtung (5) gesehen hintereinander angeordnet eine Katalysatorpackung (4) bilden, **dadurch gekennzeichnet, dass** die Katalysatorpackung aus einem vorderen Ensemble mit drei Katalysatornetzen mit einem ersten mittleren Flächengewicht und einem dem vorderen Ensemble nachgeordneten, stromabwärtigen Ensemble von Katalysatornetzlagen mit einem zweiten mittleren Flächengewicht gebildet wird, wobei das mittlere Flächengewicht des vorderen Ensembles bezogen auf das zweite mittlere Flächengewicht ein Mindergewicht im Bereich von 1,5 % bis 29% aufweist, und dass das erste mittlere Flächengewicht im Bereich von 410 bis 530 g/m² und das zweite mittlere Flächengewicht im Bereich von 540 bis 790 g/m²liegen.

2. Katalysatorsystem nach Anspruch 1, **dadurch gekennzeichnet, dass** das Mindergewicht maximal 25% beträgt.

3. Katalysatorsystem nach Anspruch 1 oder 2, **dadurch gekennzeichnet, dass** das erste mittlere Flächengewicht im Bereich von 415 bis 510 g/m² liegt, und dass das zweite mittlere Flächengewicht im Bereich von 575 bis 710 g/m² liegt.

4. Katalysatorsystem nach einem der vorhergehenden Ansprüche, **dadurch gekennzeichnet, dass** die Katalysatornetzlagen des vorderen und stromabwärtigen Ensembles aus einem Edelmetalldraht mit gleicher Drahtstärke gefertigt sind, und dass die Katalysatornetzlagen des vorderen Ensembles aus einem Gewirk mit einem ersten Wirkmuster und einer ersten Maschenweite, oder aus einem Gewebe mit einem ersten Webmuster und einer ersten Maschenweite oder aus einem Gestrick mit einem ersten Strickmuster und einer ersten Maschenweite, und die Katalysatornetzlagen des stromabwärtigen Ensembles aus einem Gewirk mit einem zweiten Wirkmuster und einer zweiten Maschenweite, oder aus einem Gewebe mit einem zweiten Webmuster und einer zweiten Maschenweite oder aus einem Gestrick mit einem zweiten Strickmuster und einer zweiten Maschenweite bestehen, wobei die erste Maschenweite größer ist als die zweite Maschenweite.

5. Katalysatorsystem nach einem der vorhergehenden Ansprüche, **dadurch gekennzeichnet, dass** das individuelle Flächengewicht der Katalysatornetzlagen des vorderen Ensembles in der Abfolge in Frischgas-Strömungsrichtung gesehen konstant ist oder zunimmt.

6. Katalysatorsystem nach einem der vorhergehenden Ansprüche, **dadurch gekennzeichnet, dass** die Katalysatornetzlagen des vorderen und des stromabwärtigen Ensembles aus Platin und Rhodium bestehen.

7. Katalysatorsystem nach einem der vorhergehenden Ansprüche, **dadurch gekennzeichnet, dass** die Katalysatornetzlagen (6; 7) eine vordere Gruppe von Netzlagen (7) mit einer Netzlage oder mit mehreren Netzlagen aus einem ersten, rhodiumreichen Edelmetalldraht sowie eine der vorderen Gruppe nachgeordnete, stromabwärtige Gruppe von Netzlagen (6) aus einem zweiten, rhodiumarmen Edelmetalldraht umfassen, wobei die Netzlage (7) oder eine der Netzlagen aus dem rhodiumreichen Edelmetalldraht eine dem Frischgas zugewandte, vorderste Netzlage (7) bildet, und wobei der Rhodiumgehalt im rhodiumreichen Edelmetalldraht mindestens 7 Gew.-% und maximal 9 Gew.-% beträgt und um mindestens 1 Prozentpunkt höher ist als der Rhodiumanteil im rhodiumarmen Edelmetalldraht.

8. Katalysatorsystem nach Anspruch 7, **dadurch gekennzeichnet, dass** der Rhodiumanteil im rhodiumarmen Edelmetalldraht im Bereich von 4 bis 6 Gew.-% liegt.

9. Katalysatorsystem nach Anspruch 7 oder 8, **dadurch gekennzeichnet, dass** der Rhodiumanteil im rhodiumreichen Edelmetalldraht im Bereich von 7,8 bis 8,2 Gew.-% und der Rhodiumanteil im rhodiumarmen Edelmetalldraht im Bereich von 4,8 bis 5,2 Gew.-% liegen.

10. Katalysatorsystem nach einem der Ansprüche 7 bis 9, **dadurch gekennzeichnet, dass** die vordere Gruppe der Netzlagen (7) am Gesamtgewicht der Katalysatorpackung (4) einen Gewichtsanteil von weniger als 30%, vorzugsweise weniger als 25%, und besonders bevorzugt weniger als 20% hat.

11. Katalysatorsystem nach einem der Ansprüche 7 bis 10, **dadurch gekennzeichnet, dass** die vordere Gruppe maximal drei Netzlagen (7) umfasst.

12. Katalysatorsystem nach einem Ansprüche 7 bis 11, **dadurch gekennzeichnet, dass** die vordere Gruppe der Netzlagen (7) von der vordersten Netzlage (7) gebildet wird.

13. Katalysatorsystem nach Anspruch 12, dass die vorderste Netzlage (7) auf den Netzlagen (6) der stromabwärtigen Gruppe aufliegt.

14. Verfahren zur katalytischen Verbrennung von Ammoniak zu Stickstoffoxiden in einer Mitteldruckanlage, indem ein Ammoniak und Sauerstoff enthaltendes Frischgas durch ein Katalysatorsystem (2) geleitet und Ammoniak dabei verbrannt wird, wobei das Frischgas mit einem Ammoniakgehalt zwischen 9,5 und 12 vol.-% unter einem Druck im Bereich zwischen 3,5 und 7 bar bei einer Katalysatornetztemperatur im Bereich von 870 bis 920°C und mit einem Durchsatz im Bereich von 6 bis 16 tN/m²d durch ein Katalysatorsystem (2) nach einem der Ansprüche 1 bis 13 geleitet wird.

## Claims

1. A catalyst system for the catalytic combustion of ammonia to form nitrogen oxides in a medium-pressure plant, having a plurality of catalyst gauze layers (6; 7) weft-knitted, woven or warp-knitted from platinum-based noble metal wire, which, when arranged one behind the other in a fresh gas flow direction (5), form a catalyst pack (4), **characterised in that** the catalyst pack is formed from a front assembly with three catalyst gauzes having a first average weight per unit area, and a downstream assembly of catalyst gauze layers arranged after the front assembly, having a second average weight per unit area, wherein the average weight per unit area of the front assembly has a weight reduction ranging from 1.5% to 29% relative to the second average weight per unit area, and **in that** the first average weight per unit area is in the range of 410 to 530 g/m² and the second average weight per unit area is in the range of 540 to 790 g/m².

2. The catalyst system according to claim 1, **characterised in that** the weight reduction is no more than 25 %.

3. The catalyst system according to claim 1 or 2, **characterised in that** the first average weight per unit area is in the range of 415 to 510 g/m², and **in that** the second average weight per unit area is in the range of 575 to 710 g/m².

4. The catalyst system according to one of the preceding claims, **characterised in that** the catalyst gauze layers of the front and downstream assemblies are made from a noble metal wire with the same wire gauge, and **in that** the catalyst gauze layers of the front assembly consist of a warp-knitted fabric with a first warp-knit pattern and a first mesh size, or of a woven fabric with a first weave pattern and a first mesh size, or of a weft-knitted fabric with a first weft-knit pattern and a first mesh size, and the catalyst gauze layers of the downstream assembly consist of a warp-knitted fabric with a second warp-knit pattern and a second mesh size, or of a woven fabric with a second weave pattern and a second mesh size, or of a weft-knitted fabric with a second weft-knit pattern and a second mesh size, wherein the first mesh size is greater than the second mesh size.

5. The catalyst system according to one of the preceding claims, **characterised in that** the individual weight per unit area of the catalyst gauze layers of the front assembly is constant or increases in the order in the fresh gas flow direction.

6. The catalyst system according to one of the preceding claims, **characterised in that** the catalyst gauze layers of the front and downstream assemblies consist of platinum and rhodium.

7. The catalyst system according to one of the preceding claims, **characterised in that** the catalyst gauze layers (6; 7) comprise a front group of gauze layers (7) with a gauze layer or with a plurality of gauze layers composed of a first, rhodium-rich, noble metal wire, and a downstream group of gauze layers (6) arranged after the front group, composed of a second, rhodium-poor, noble metal wire, wherein the gauze layer (7) or one of the gauze layers composed of the rhodium-rich noble metal wire forms a front gauze layer (7) facing the fresh gas, and wherein the rhodium content in the rhodium-rich noble metal wire is at least 7 wt.% and no more than 9 wt.% and is at least 1 percentage point higher than the rhodium content in the rhodium-poor noble metal wire.

8. The catalyst system according to claim 7, **characterised in that** the rhodium content in the rhodium-poor noble metal wire is in the range of 4 to 6 wt.%.

9. The catalyst system according to claim 7 or 8, **characterised in that** the rhodium content in the rhodium-rich noble metal wire is in the range of 7.8 to 8.2 wt.% and the rhodium content in the rhodium-poor noble metal wire is in the range of 4.8 to 5.2 wt.%.

10. The catalyst system according to one of claims 7 to 9, **characterised in that** the front group of gauze layers (7) has a proportion by weight of less than 30%, preferably less than 25%, and particularly preferably less than 20%, of the total weight of the catalyst pack (4).

11. The catalyst system according to one of claims 7 to 10, **characterised in that** the front group comprises no more than three gauze layers (7).

12. The catalyst system according to one of claims 7 to 11, **characterised in that** the front group of gauze layers (7) is formed by the front gauze layer (7).

13. The catalyst system according to claim 12, **characterised in that** the front gauze layer (7) lies on the gauze layers (6) of the downstream group.

14. A process for the catalytic combustion of ammonia to form nitrogen oxides in a medium-pressure plant by passing a fresh gas that contains ammonia and oxygen through a catalyst system (2), whereby ammonia is burned, wherein the fresh gas with an ammonia content of between 9.5 and 12 vol.% is passed through a catalyst system (2) according to one of claims 1 to 13 under a pressure in the range of between 3.5 and 7 bar at a catalyst gauze temperature in the range of 870 to 920°C and with a throughput in the range of 6 to 16 tN/m²d.

## Revendications

1. Système de catalyseur pour la combustion catalytique d'ammoniac en oxydes d'azote dans une installation à moyenne pression, comprenant une pluralité de couches de filet catalytique (6 ; 7) tricotées, tissées ou maillées en fil de métal précieux à base de platine, qui forment, disposées les unes derrière les autres vu dans une direction d'écoulement de gaz frais (5), un garnissage de catalyseur (4), **caractérisé en ce que** le garnissage de catalyseur est formé par un ensemble avant doté de trois filets catalytiques ayant un premier poids surfacique moyen et un ensemble aval de couches de filet catalytique, disposé après l'ensemble avant, ayant un second poids surfacique moyen, le poids surfacique moyen de l'ensemble avant présentant, par rapport au second poids surfacique moyen, un défaut de poids compris entre 1,5 % et 29 %, et **en ce que** le premier poids surfacique moyen est compris entre 410 et 530 g/m² et le second poids surfacique moyen est compris entre 540 et 790 g/m².

2. Système de catalyseur selon la revendication 1, **caractérisé en ce que** le défaut de poids est de 25 % maximum.

3. Système de catalyseur selon la revendication 1 ou 2, **caractérisé en ce que** le premier poids surfacique moyen est compris entre 415 et 510 g/m², et **en ce que** le second poids surfacique moyen est compris entre 575 et 710 g/m².

4. Système de catalyseur selon l'une des revendications précédentes, **caractérisé en ce que** les couches de filet catalytique de l'ensemble avant et aval sont fabriquées en un fil de métal précieux avec une épaisseur de fil identique, et **en ce que** les couches de filet catalytique de l'ensemble avant sont constituées d'un maillage avec un premier dessin de maillage et une première ouverture de maille, ou d'un tissu avec un premier dessin d'armure et une première ouverture de maille ou d'un tricot avec un premier point de tricot et une première ouverture de maille, et les couches de filet catalytique de l'ensemble aval sont constituées d'un maillage avec un second dessin de maillage et une seconde ouverture de maille, ou d'un tissu avec un second dessin d'armure et une seconde ouverture de maille ou d'un tricot avec un second point de tricot et une seconde ouverture de maille, la première ouverture de maille étant supérieure à la seconde ouverture de maille.

5. Système de catalyseur selon l'une des revendications précédentes, **caractérisé en ce que** le poids surfacique individuel des couches de filet catalytique de l'ensemble avant est constant ou augmente dans l'ordre vu dans la direction d'écoulement de gaz frais.

6. Système de catalyseur selon l'une des revendications précédentes, **caractérisé en ce que** les couches de filet catalytique de l'ensemble avant et de l'ensemble aval sont constituées de platine et de rhodium.

7. Système de catalyseur selon l'une des revendications précédentes, **caractérisé en ce que** les couches de filet catalytique (6 ; 7) comprennent un groupe avant de couches de filet (7) avec une couche de filet ou avec plusieurs couches de filet en un premier fil de métal précieux riche en rhodium ainsi qu'un groupe aval de couches de filet (6), disposé après le groupe avant, en un second fil de métal précieux pauvre en rhodium, la couche de filet (7) ou une des couches de filet en fil de métal précieux riche en rhodium formant une couche de filet (7) située la plus en avant orientée vers le gaz frais et la teneur en rhodium dans le fil de métal précieux riche en rhodium étant d'au moins 7 % en poids et au plus 9 % en poids et étant au moins 1 point de pourcentage supérieure à la part de rhodium dans le fil de métal précieux pauvre en rhodium.

8. Système de catalyseur selon la revendication 7, **caractérisé en ce que** la part de rhodium dans le fil de métal précieux pauvre en rhodium est comprise entre 4 et 6 % en poids.

9. Système de catalyseur selon la revendication 7 ou 8, **caractérisé en ce que** la part de rhodium dans le fil de métal précieux riche en rhodium est comprise entre 7,8 et 8,2 % en poids et la part de rhodium dans le fil de métal précieux pauvre en rhodium est comprise entre 4,8 et 5,2 % en poids.

10. Système de catalyseur selon l'une des revendications 7 à 9, **caractérisé en ce que** le groupe avant des couches de filet (7) présente une fraction pondérale inférieure à 30 %, de préférence inférieure à 25 % et de manière particulièrement préférée inférieure à 20 % par rapport au poids total du garnissage de catalyseur (4).

11. Système de catalyseur selon l'une des revendications 7 à 10, **caractérisé en ce que** le groupe avant comprend trois couches de filet (7) maximum.

12. Système de catalyseur l'une des revendications 7 à 11, **caractérisé en ce que** le groupe avant des couches de filet (7) est formé par la couche de filet (7) située la plus en avant.

13. Système de catalyseur selon la revendication 12, en ce que la couche de filet (7) située la plus en avant repose sur les couches de filet (6) du groupe aval.

14. Procédé de combustion catalytique d'ammoniac en oxydes d'azote dans une installation à moyenne pression, un gaz frais contenant de l'ammoniac et de l'oxygène étant guidé à travers un système de catalyseur (2) et de l'ammoniac étant ainsi brûlé, le gaz frais avec une teneur en ammoniac comprise entre 9,5 et 12 %vol étant guidé à travers un système de catalyseur (2) selon l'une des revendications 1 à 13, sous une pression comprise entre 3,5 et 7 bar, à une température de filet catalytique comprise entre 870 et 920 °C et avec un débit compris entre 6 et 16 tN/m²d.
